# EUROPEAN PATENT APPLICATION

(11) **EP 4 361 773 A1**
(43) Date of publication of application: **01.05.2024**
(21) Application number: 22828227.3
(22) Date of filing: 08.06.2022
(51) Int. Cl.: G06F 3/01, B60H 3/00, B60R 16/037

(54) **CONTROL DEVICE, CONTROL SYSTEM, CONTROL METHOD, AND EJECTION DEVICE**

(30) Priority: 24.06.2021 JP 2021105192
(71) Applicant: Sony Group Corporation, Tokyo 108-0075 (JP)
(72) Inventor: NAGATA, Koji, Tokyo 108-0075 (JP)
(74) Representative: Witte, Weller & Partner Patentanwälte mbB
(86) International application number: PCT/JP2022/023101
(87) International publication number: WO 2022/270310

(57) **Abstract**

[Object] To provide a control apparatus, a control system, a control method, and an ejection apparatus capable of ejecting a scent at an appropriate timing.

[Solving Means] A control apparatus according to an embodiment of the present technology includes a calculation section and a signal generation section. The calculation section calculates a breathing cycle based on an output of a body motion detection section that detects a breathing body motion of a user. The signal generation section generates an output signal that causes an ejection section to eject a scent to a predetermined space region based on the output of the calculation section.

## Description

### Technical Field

The present technology relates to a control apparatus, a control system, a control method, and an ejection apparatus capable of controlling ejection of a scent.

### Background Art

In the related art, there has been known a technique of providing a scent at a timing at which a living scene is switched, since the scent is expected to have an effect of changing a mood. The timing at which the living scene is switched is, for example, getting in and out of an automobile. Patent Literature 1 discloses a structure including a fragrance spraying apparatus that feeds a fragrance into an automobile cabin, a pressure sensor that detects an occupant in the automobile cabin, and a control circuit that controls the fragrance spraying apparatus, in which when the occupant is detected in the automobile cabin by the pressure sensor, the fragrance is fed into the automobile cabin based on a movement of an automobile door from an open state to a closed state.

### Citation List

### Patent Literature

Patent Literature 1: Japanese Patent Application Laid-open No. 2007-283975

### Disclosure of Invention

### Technical Problem

However, Patent Literature 1 has a problem that when the door is just re-closed, the fragrance is ejected, and it is not possible to eject at an entirely appropriate timing.

In view of the above circumstances, an object of the present technology is to provide a control apparatus, a control system, a control method, and an ejection apparatus capable of ejecting a scent at an appropriate timing.

### Solution to Problem

A control apparatus according to an embodiment of the present technology includes a calculation section and a signal generation section.

The calculation section calculates a breathing cycle based on an output of a body motion detection section that detects a breathing body motion of a user.

The signal generation section generates an output signal that causes an ejection section to eject a scent to a predetermined space region based on the output of the calculation section.

Since the control apparatus ejects the scent based on the breathing cycle of the user, it is possible to eject the scent to the user at an appropriate timing.

The signal generation section may generate the output signal so that the scent ejected from the ejection section reaches the predetermined region within an inhalation period of the user based on the breathing cycle.

The control apparatus may further include a processing section that detects a position of a face of the user based on an output of an image capturing section that captures an image of the user, and a first determination section that determines whether or not the face of the user is positioned in the predetermined space region based on the output of the processing section.

The signal generation section generates the output signal when the first determination section determines that the face of the user is positioned in the predetermined space region.

The processing section may detect a position of a nose of the user.

The signal generation section may generate the output signal when the first determination section determines that the position of the nose of the user is positioned in the predetermined space region.

The signal generation section may generate an output signal that controls a total ejection amount of the scent.

The control apparatus may further include a selection section that can select a predetermined scent from among plural types of scents that can be ejected by the ejection section based on information of the user acquired in advance.

The signal generation section generates an output signal that causes the predetermined scent selected by the selection section to be ejected.

The control apparatus may further include a second determination section that determines a vehicle state based on an output of a vehicle state detection section that detects the vehicle state in which the user gets in.

The signal generation section generates the output signal based on an output of the second determination section.

The control apparatus may further include an evaluation section that evaluates a state of the user before and after generation of the output signal based on the output of the image capturing section.

An ejection apparatus according to an embodiment of the present technology includes an ejection section and a control apparatus.

The ejection section ejects a scent to a user.

The control section includes a calculation section and a signal generation section.

The calculation section calculates a breathing cycle based on an output of a body motion detection section that detects a breathing body motion of the user.

The signal generation section generates an output signal that causes the ejection section to eject the scent to a predetermined space region based on an output of the calculation section.

The ejection section may include a plurality of cartridge sections that accommodates each of the plural types of scents.

The control apparatus further includes a selection section that selects a predetermined cartridge section from the plurality of cartridge sections.

The ejection section may be arranged in a vehicle cabin, and the predetermined space region may be a predetermined space region in the vehicle cabin.

A control method according to an embodiment of the present technology includes calculating a breathing cycle based on an output of a body motion detection section that detects a breathing body motion of a user by a control apparatus.

Based on the breathing cycle, an output signal is generated that causes an ejection section to eject the scent to a predetermined space region by the control apparatus.

A control system according to an embodiment of the present technology includes an ejection section, a body motion detection section, and a control apparatus.

The ejection section ejects a scent to a user.

The body motion detection section detects a breathing body motion of the user.

The control apparatus includes a calculation section and a signal generation section.

The calculation section calculates a breathing cycle based on an output of the body motion detection section.

The signal generation section generates an output signal that causes the ejection section to eject a scent to a predetermined space region based on the breathing cycle.

The control system may further include an image capturing section that captures an image of the user.

The control apparatus further includes an evaluation section that evaluates a state of the user before and after generation of the output signal based on an output of the image capturing section.

### Brief Description of Drawings

[Fig. 1] Fig. 1 is a block diagram showing a configuration of a control system according to an embodiment of the present technology.
[Fig. 2] Fig. 2 is a view of a vehicle cabin from backward.
[Fig. 3] Fig. 3 is a diagram showing a user and a predetermined region.
[Fig. 4] Fig. 4 is a table showing information of the user stored in a storage.
[Fig. 5] Fig. 5 is a flowchart showing a processing procedure executed by the control apparatus.
[Fig. 6] Fig. 6 is a flowchart explaining processing of determining an ejection condition.
[Fig. 7] Fig. 7 is a flowchart for explaining processing of selecting a scent.
[Fig. 8] Fig. 8 is a flowchart for explaining processing of determining an ejection timing.
[Fig. 9] Fig. 9 is a timing chart for explaining a relationship between breathing of the user and various processing performed by the control apparatus. Mode(s) for Carrying Out the Invention

Embodiments according to the present technology will now be described below with reference to the drawings.

A control system of the present embodiment is installed in a moving body such as a vehicle, a vessel, or an aircraft. In the present embodiment, the control system of the present embodiment will be described by taking, for example, a vehicle as an example of a moving object.

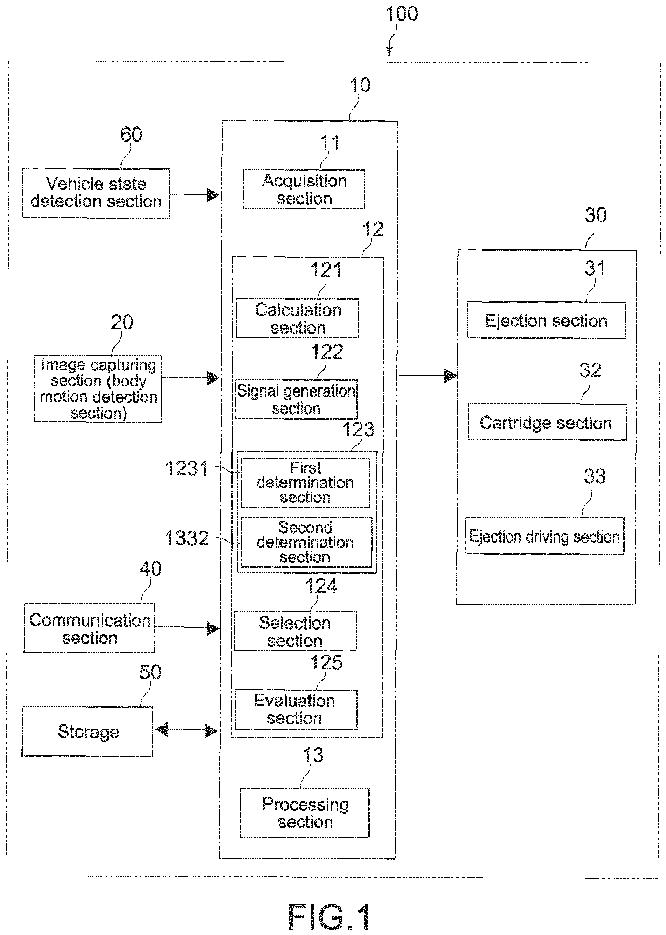

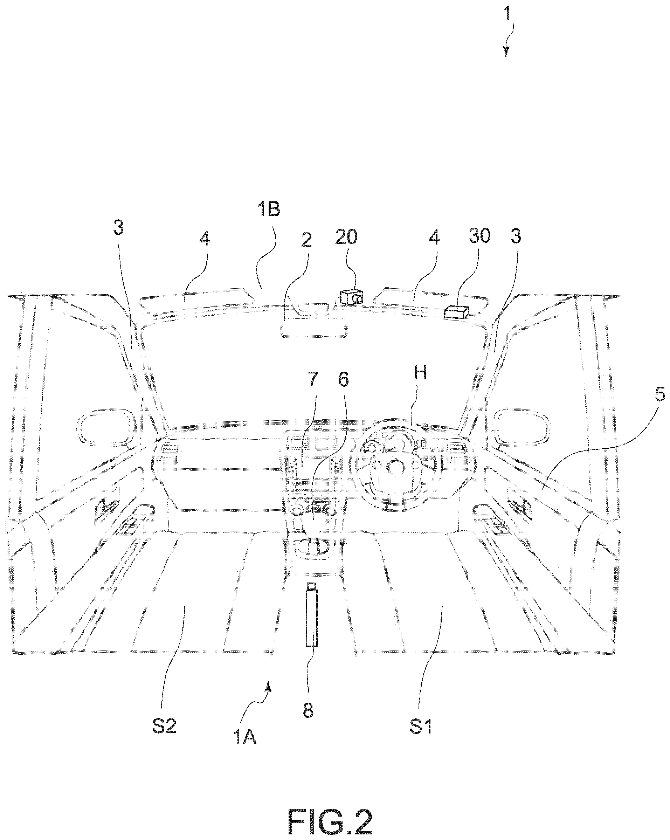

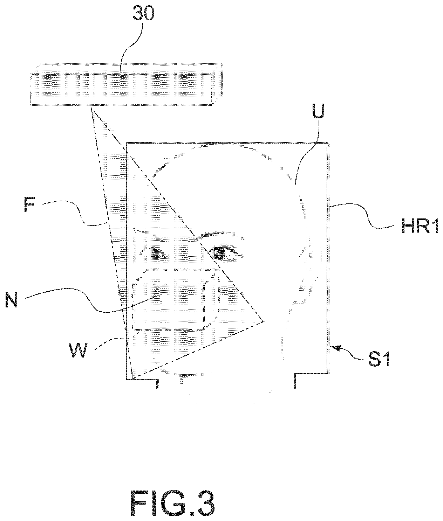

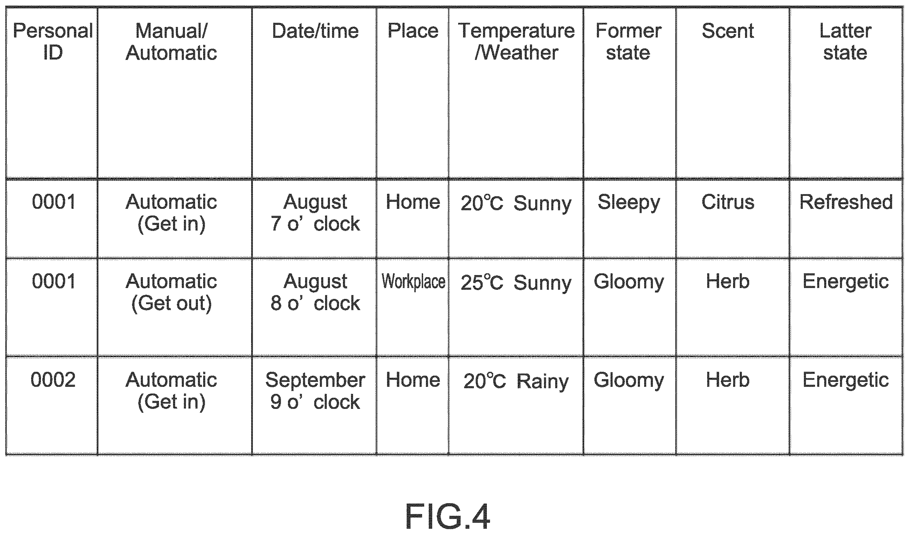

Fig. 1 is a block diagram showing a configuration of a control system 100 according to the present embodiment, Fig. 2 is a diagram showing a cabin of a vehicle 1 (hereinafter, also referred to as a vehicle cabin 1A) as viewed from backward, Fig. 3 is a diagram showing a user U and a predetermined space region W, and Fig. 4 is a table showing information of the user U stored in a storage 50. In the present embodiment, the user U represents a user positioned in a driver's seat S1.

### <First Embodiment>

### [Control System]

As shown in Fig. 1, the control system 100 mainly includes a control apparatus 10, an image capturing section 20, an injection apparatus 30, a communication section 40, the storage 50, and a vehicle state detection section 60.

### (Control Apparatus)

The control apparatus 10 is configured to calculate a breathing cycle of the user U based on the output of the image capturing section 20 that captures an image of the user U, and to cause the injection apparatus 30 to eject the scent based on the breathing cycle of the user U. The details of the control apparatus 10 will be described later.

### (Image Capturing Section)

The image capturing section 20 is installed on the vehicle cabin 1A. The image capturing section 20 has a function as a body motion detection section that captures the image of the user U and detects a movement of the body (a movement of a chest) when the user U breathes.

The image capturing section 20 is, for example, a digital camera including an image sensor such as a CMOS (Complementary Metal-Oxide Semiconductor) sensor or a CCD (Charge Coupled Device) sensor. In addition, for example, a digital camera equipped with a TOF (Time Of Flight) type distance-measuring sensor or an infrared camera equipped with an infrared illumination such as an infrared LED may be used. A captured image includes both a still image and a moving image (video).

The image capturing section 20 is installed so as to be able to image the chest and a face of the user U gets in the driver's seat S1. The number and an installation place of the image capturing section 20 are not particularly limited, and in the present embodiment, as shown in Fig. 2, the image capturing section 20 is installed on a ceiling portion 1B between a room mirror 2 and a sun visor 4 of the vehicle cabin 1A. A target to be imaged may include not only the user U getting in the driver's seat S1 but also a user getting in a passenger's seat S2. In the present embodiment, an image of one user is captured by one image capturing section 20, but the present embodiment is not limited thereto. For example, an image of one user may be captured by the image capturing sections provided at two places of the room mirror 2 and an A-pillar (front pillar) 3.

The breathing of the user U is detected and determined, for example, by the movement of the chest of the user U. Here, the movement of the chest refers to a movement in which the lung is inflated and a thickness of the chest is increased when the user inhales and in which the lung is deflated and the thickness of the chest is decreased when the user exhales, but the movement is not limited thereto, and respiration of the user U and the movements of the mouth and the nose may be detected.

In the present embodiment, the body motion detection section is configured by the image capturing section 20 that captures the image of the face of the user U, but the present embodiment is not limited thereto, and the body motion of the user U at the time of breathing may be detected by a camera different from the image capturing section 20.

Furthermore, in the present embodiment, the body motion detection section is a camera, but the present embodiment is not limited thereto, and the body motion of the user U at the time of breathing may be detected by a seat sensor that senses the pressure provided on the driver's seat S1.

### (Communication Section)

The communication section 40 transmits various types of data obtained from various devices, servers, and the like inside and outside the vehicle to the control apparatus 10.

The various types of data include, for example, positional information of the vehicle 1. GNSS (Global Navigation Satellite System) signals are received from a GNSS satellite and the positional information of the vehicle 1 is acquired. Other type is road traffic information such as traffic jam information. Electromagnetic waves transmitted by a road traffic information communication system (VICS (Vehicle Information and Communication System) (registered trademark) such as a radio beacon, an optical beacon, and FM multiplex broadcasting are received.

### (Storage)

The storage 50 is configured of a storage device such as a hard disk and a semiconductor memory. The storage 50 stores programs for causing the control apparatus 10 to execute various functions and stores calculation parameters, which will be described later.

In addition, the storage 50 stores not only the programs for executing various functions but also information about the scent of the user U, which will be described later.

The storage 50 is not limited to be built in the control system 100, and may be a cloud server or the like that can be connected to the control apparatus 10 via a network.

### (Vehicle State Detection Section)

The vehicle state detection section 60 includes various sensors for detecting the state of the vehicle 1, and supplies sensor data from each sensor to the control apparatus 10. The type and number of the various sensors included in the vehicle state detection section 60 are not particularly limited as long as they can be actually installed in the vehicle 1.

The various sensors are, for example, a velocity sensor, an acceleration sensor, an angular velocity sensor (gyro sensor), an inertial measurement apparatus (IMU (Inertial Measurement Unit) that integrates the above-described sensors, a sensor that recognizes the start of the engine, a sensor that recognizes opening and closing of a door 5, a sensor that recognizes a shift position of a shift lever 6 (or a select lever), a parking brake 8, and the like.

Guidance information of a car navigation system 7 may be acquired by the vehicle state detection section 60 or may be acquired by the communication section 40.

Subsequently, the injection apparatus 30 in which ejection of a scent is controlled by the control apparatus 10 will be described.

### [Injection Apparatus]

The injection apparatus 30 is controlled to eject the scent based on an output signal output from the control apparatus 10.

According to the present embodiment, the injection apparatus 30 is arranged in the vicinity of the sun visor 4, and includes an ejection section 31, a cartridge section 32, and an ejection driving section 33.

The ejection section 31 has a function as a nozzle for ejecting the scent, and an ejecting port thereof is directed to a region where the user U is positioned.

The cartridge section 32 has a function as a tank filled with the scent, and is connected to the ejection section 31. Furthermore, it is more preferable that one or more types of scents are filled in the cartridge section 32 and that a plurality of cartridge sections filled with plural different types of scents is provided.

The ejection driving section 33 controls the ejection section 31 and the cartridge section 32 based on the output of the control apparatus 10. For example, the cartridge section 32 filled with a predetermined scent is selected from the plurality of cartridge sections 32, and the predetermined scent is caused to be ejected from the ejection section 31.

The injection apparatus 30 is, for example, an apparatus having a mechanism for spraying. As this type of apparatus, for example, an injection apparatus having directivity such as a spray device in which the scent is delivered by a pump, compressed air, or the like is suitably used.

The injection apparatus 30 is not limited to the mechanism for causing the scent to be ejected to the user U, and may be an air pump that delivers a volatile scent.

Furthermore, an ejection direction of the ejection section 31 may be fixed or may be movable, which can be changed automatically or manually. In the case of the automatic type, for example, the control apparatus 10 may change the ejection direction of the ejection section 31 based on the position of the face of the user U captured by the image capturing section 20.

### [Details of Control Apparatus]

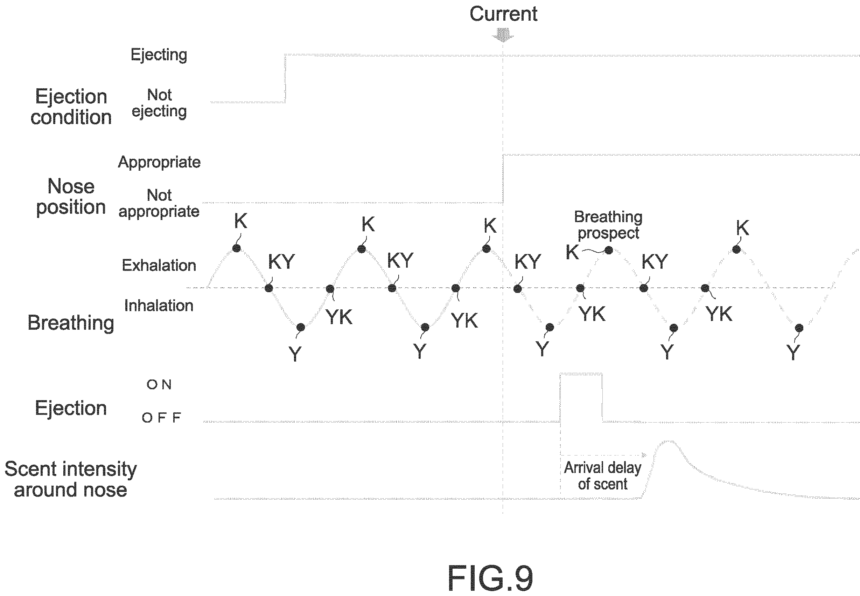

Subsequently, details of the control apparatus 10 will be described. Fig. 9 is a timing chart showing a relationship between the breathing of the user U and various processes executed by the control apparatus 10.

The control apparatus 10 includes a computer (information processing apparatus) including a CPU (Central Processing Unit) and a memory. The memory stores programs for causing the CPU to execute various functions and stores various parameters described later. These programs and parameters may be stored in the storage 50.

As shown in Fig. 1, the control apparatus 10 includes an acquisition section 11, a control section 12, and a processing section 13.

The acquisition section 11 acquires various kinds of information such as the breathing of the user U, the position of the user U, and vehicle information from the image capturing section 20, the communication section 40, the storage 50, and the vehicle state detection section 60. The acquisition section 11 further acquires programs for executing various functions and information about and various parameters from the storage 50.

The processing section 13 is an image processing section that detects the position of the face of the user U from the captured image of the user U captured by the image capturing section 20. In the present embodiment, the processing section 13 is configured to be able to detect the position of a nose of the user U from the captured image of the user U captured by the image capturing section 20.

Furthermore, the processing section 13 detects, for example, the movement of the chest of the user U as the body movement during the breathing of the user U detected by the body movement detection section.

The control section 12 includes a calculation section 121, a signal generation section 122, a determination section 123, a selection section 124, and an evaluation section 125.

The calculation section 121 calculates the breathing cycle based on an output of the processing section 13. The signal generation section 122 generates an output signal that causes the ejection section 31 to eject the scent to the predetermined space region W based on an output of the calculation section 121.

Here, generating the output signal of the signal generation section 122 includes not only generating the output signal but also outputting the generated output signal to the injection apparatus 30.

As shown in Fig. 9, the calculation section 121 calculates the breathing cycle of the user U based on an output result of the processing section 13 from the movement of the chest of the user U as a point YK at which the user U most inhales the breath from the time point at which the position of the chest is nearest (handle H side) and a point KY at which the user U most exhales the breath at the time point at which the position of the chest of the user U is deepest (seat S1 side).

Here, a point K shown in Fig. 9 is a point at which the speed at which the position of the chest of the user U moves to the deepest side is the fastest.

A point Y shown in Fig. 9 is a point at which the speed at which the position of the chest of the user U moves to the nearest side is the fastest.

Subsequently, the calculation section 121 determines an inhalation period and an exhalation period from the breathing cycle calculated.

As shown in Fig. 9, the inhalation period is a period from the point KY to the point YK including the point Y.

The exhalation period is a period from the point YK to the point KY including the point K as shown in Fig. 9.

As described above, the calculation section 121 calculates the breathing cycle of the user U.

As shown in Fig. 9, the calculation section 121 calculates not only the breathing cycle (solid line) up to a current time point at which the captured image is acquired from the image capturing section 20, but also a predicted breathing cycle (dotted line) of the user U after a predetermined time from the current time point at which a detection result output from the image capturing section 20 is acquired.

The predicted breathing cycle of the user U after the predetermined time may be calculated from, for example, an average cycle obtained by averaging cycles of past several times from the current time point.

The predetermined time is not particularly limited, but is, for example, a time period of two cycles or three cycles from the current time point. Furthermore, in the present embodiment, a waveform passing through the point K and the point Y is calculated by a sine wave, but may be linear or rectangular.

As shown in Fig. 3, the predetermined space region W is a space region in front of a headrest HR1 (on a steering wheel H side) of the driver's seat S1 in which the user U is seated in the ejection region F in which the scent is ejected from the ejection section 31. The predetermined space region W preferably includes a region in which the nose N of the user U is positioned.

The signal generation section 122 generates the output signal that causes the ejection section 31 to eject the scent to the predetermined space region W based on the breathing cycle of the user U calculated by the calculation section 121. Accordingly, it is possible to provide the scent at an appropriate timing for the user U.

In particular, in the present embodiment, the signal generation section 122 generates the output signal based on the breathing cycle of the user U so that the scent ejected from the ejection section 31 reaches the predetermined space region W within the inhalation period of the user U. Thus, it is possible to inhale the scent efficiently by the user U.

As shown in Fig. 9, the inhalation period of the user U is the period from the point KY to the point YK including the point Y as described above. A time lag occurs from the time when the scent is ejected from the ejection section 31 to the time when the scent reaches the predetermined space region W. However, based on the time lag, the signal generation section 122 generates the output signal to the injection apparatus 30 so that the scent reaches within the inhalation period of the user U. Accordingly, it is possible to provide the scent within the inhalation period of the user U without the time lag of the scent.

The time lag is calculated based on an ejection speed of the scent and a distance between the ejection section 31 and the predetermined space region W. The ejection speed and the distance may be stored in the storage 50 in advance. Based on the information of the time lag stored in the storage 50, the signal generation section 122 calculates the ejection timing of the scent, and generates the above-described output signal in the injection apparatus 30.

The determination section 123 includes a first determination section 1231 and a second determination section 1232. The first determination section 1231 determines whether or not the face of the user U is positioned in the predetermined space region W based on the output of the processing section 13 that detects the position of the face of the user U based on the output of the image capturing section 20 that captures the image of the user U.

When the first determination section 1231 determines that the face of the user U is positioned in the predetermined space region W, the signal generation section 122 generates the output signal that causes the injection apparatus 30 to eject the scent.

Accordingly, when the user U is present in the predetermined space region W in which the scent is ejected, the scent is ejected from the ejection section 31 so that the scent can be provided at an appropriate position.

In particular, in the present embodiment, the processing section 13 detects the position of the nose N of the user U based on the output of the image capturing section 20 that captures the image of the user U, and the signal generation section 122 generates the output signal that causes the injection apparatus 30 to eject the scent when the first determination section 1231 determines that the position of the nose N of the user U is positioned in the predetermined space region W.

The processing section 13 detects a part (in the present embodiment, the nose N) that is set as a detection target in advance from the captured image captured by the image capturing section 20. In the present embodiment, the processing section 13 includes a deep learning device, determines presence or absence of the detection target in the captured image while using a learning model (face recognition algorithm) stored in the processing section 13, and detects the position of the detection target when present.

As a result, since the scent can be ejected at a position where the user U is easily detected, it is possible to prevent the amount of the scent to be ejected from increasing, and to provide the user U with an appropriate amount of the scent.

The signal generation section 122 generates the output signal that controls a total ejection amount of the scent in the injection apparatus 30. This can prevent the scent from becoming excessively strong.

The total ejection amount of the scent is controlled by using the information of the user U stored in the storage 50.

The information of the user U is information based on a facial expression of the user U by the evaluation section 125 described later.

The total ejection amount of the scent is an amount calculated based on the ejection amount of the scent at the time of one ejection of the scent and the number of ejection times of the scent.

Here, a control method by the signal generation section 122 of the injection apparatus 30 is not particularly limited, and is typically On/Off control, and a flow rate of the scent may be determined by an On duration.

In addition, the signal generation section 122 generates the output signal that controls the number of ejection times of the scent to the injection apparatus 30. Accordingly, it is possible to provide the user U with the scent at a more appropriate timing. Furthermore, if the scent is ejected at one time, the amount of the scent is large, which may be uncomfortable for the user U. If the scent is ejected at several times, it is possible to prevent the scent from becoming too strong.

Similarly to the ejection amount of the scent, the number of ejection times is controlled by using the information of the user U based on the facial expression of the user U stored in the storage 50 by the evaluation section 125, which will be described later.

In addition, the signal generation section 122 can control the number of the ejection times of the scent ejected by the injection apparatus 30 by the output signal.

The selection section 124 can select the predetermined scent from among plural types of scents that can be ejected by the ejection section 31 based on the information of the user U acquired in advance, and the signal generation section 122 can generate the output signal that ejects the predetermined scent selected by the selection section 124.

The plural types of scents include the number of types of the scents filled in the cartridge section 32, and can be appropriately set by the user U. The types of the scents include scents such as lavender, rosemary, citrus, aube-citrus, and the like.

The predetermined scent is not limited to one type of the scent. For example, the plural types of scents may be selected for the purpose of blending the scents. Accordingly, it is possible to provide an appropriate scent according to a preference of the user U and a situation of the user U.

The selection section 124 can select the scent based on the information of the user U stored in the storage 50.

Since the storage 50 stores a preferable scent of the user U and information about the scent used in the past, the selection section 124 can provide a more appropriate scent in accordance with, for example, situations such as the month, day, time, and current position.

The second determination section 1232 determines a vehicle state based on the output of the vehicle state detection section 60 that detects the vehicle state in which the user U gets in, and the signal generation section 122 generates the output signal that causes the injection apparatus 30 to eject the scent when the predetermined conditions of the vehicle state are satisfied.

The vehicle state includes, for example, a locked state of the vehicle 1, an open/closed state of the door, whether or not the user U is seated on the driver's seat, an on/off state of the engine, whether or not the car navigation guides, an on/off state of the parking brake 8, a state of the shift lever 6, a road condition (for example, an expressway or a general road, a degree of a traffic jam), and the like.

The predetermined condition is, for example, whether or not the shift lever 6 is driven when the vehicle 1 starts and provides the scent, and when the shift lever 6 is driven, the output signal that causes the injection apparatus 30 to eject the scent is generated. Thus, it is possible to provide the user with the scent at a more appropriate timing.

In addition, when the scent is selected by the selection section 124 in accordance with a situation such as at the time of starting or at the time of arrival at a destination, it is possible to provide the user U with an appropriate timing and an appropriate scent.

The evaluation section 125 evaluates the state of the user U before and after generation of the output signal based on the output of the processing section 13.

The facial expression of the user includes, for example, an energetic facial expression, a relaxed facial expression, a refreshed facial expression, a sleepy facial expression, and a facial expression that seems to strongly smell the scent.

The evaluation section 125 evaluates the facial expression based on the captured image acquired by the image capturing section 20 and the facial expression set as the detection target in advance. In the present embodiment, the evaluation section 125 includes, for example, the deep learning device, and recognizes and evaluates the facial expression of the user U using the learning model stored in the evaluation section 125.

The evaluation section 125 recognizes and evaluates the facial expression of the user U, and then stores the information in the storage 50 as shown in Fig. 4. Thus, since the information when the user U is provided with the scent is accumulated, it is possible to provide the user U with more appropriate scent.

In the present embodiment, Fig. 4 shows information acquired in the past before the use U gets in the vehicle 1.

"Personal ID" of Fig. 4 is the number of each user, and is sorted as "0001" and "0002" for each user. The personal ID for each user may be compared by the control apparatus 10 using the deep learning or the like, or may be manually set by each user.

Subsequently, "manual or automatic" indicates whether or not the scent has been manually ejected by the user or automatically ejected by the control apparatus 10. "Get in" and "get out" are at the time when the scent is ejected, and "get in" is at the time when getting in the vehicle 1, and "get out" is at the time when getting out of the vehicle 1.

Subsequently, "date/time" refers to date and time when the scent is ejected. In Fig. 4, the month and the time are stored in the storage 50, but it is not limited thereto, and may be even stored for month, day, hour, and minute.

Subsequently, "place" is a place where the scent is ejected, and as shown in Fig. 4, a home and a workplace are exemplified, but it is not limited thereto and may be an amusement park or the like. The positional information is acquired from the vehicle state detection section 60 and the communication section 40 by the control apparatus 10.

Subsequently, "temperature/weather" is the temperature and the weather when the scent is ejected, as shown in Fig. 4, is information such as 20°C and sunny, and is acquired from the communication section 40 by the control apparatus 10. In Fig. 4, the temperature is shown in degrees Celsius, but may also be shown in degrees Fahrenheit.

Subsequently, "former state" is the facial expression of the user U before the scent is ejected to the user U (before the signal generation section 122 generates the output signal). The facial expression of the user U is evaluated by the evaluation section 125 as described above. As shown in Fig. 4, for example, it is a sleepy facial expression or a gloomy facial expression.

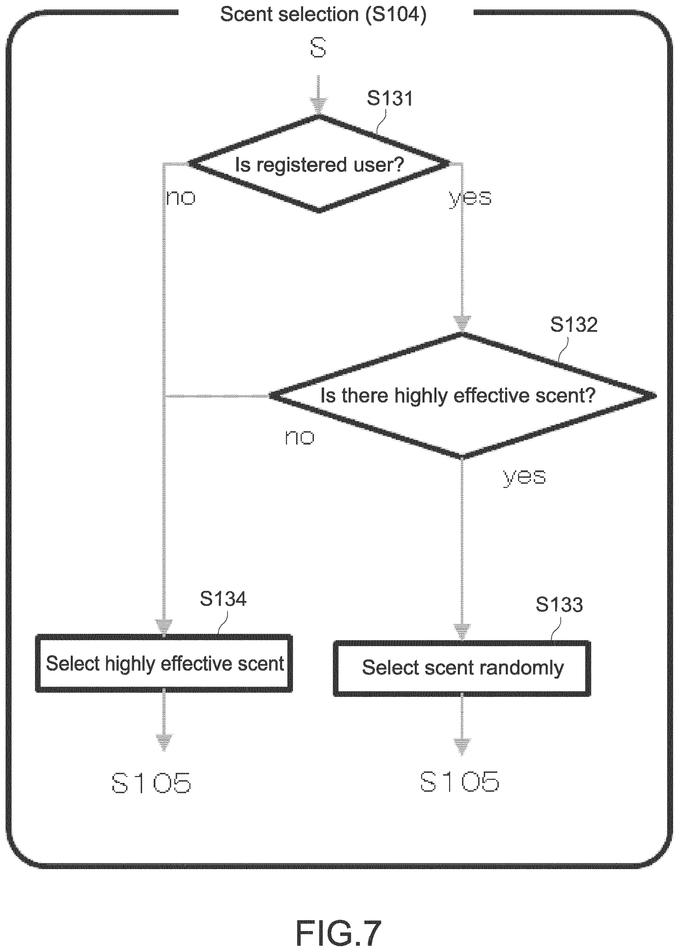

In the "former state", the timing at which the facial expression of the user U is evaluated is not particularly limited, but may be evaluated, for example, in S131 step of Fig. 7 described later.

Subsequently, the "scent" is a type of the scent ejected to the user U, and as described above, a scent such as lavender, rosemary, citrus, aube-citrus, or the like may be mentioned.

Subsequently, "latter state" is the facial expression of the user U after the scent is ejected to the user U (after the signal generation section 122 generates the output signal). The expression of the user U is evaluated by the evaluation section 125 as described above. As shown in Fig. 4, for example, it is a refreshed facial expression or an energetic facial expression.

The timing at which the facial expression of the user U is evaluated in the "latter state" is not particularly limited, but may be, for example, 1 second or 10 seconds after the signal generation section 122 generates the output signal.

Here, the table shown in Fig. 4 is an example, and is not intended to limit the present technology, and various other conditions may be taken into consideration.

### [Operation of Control System]

### (Application Example 1)

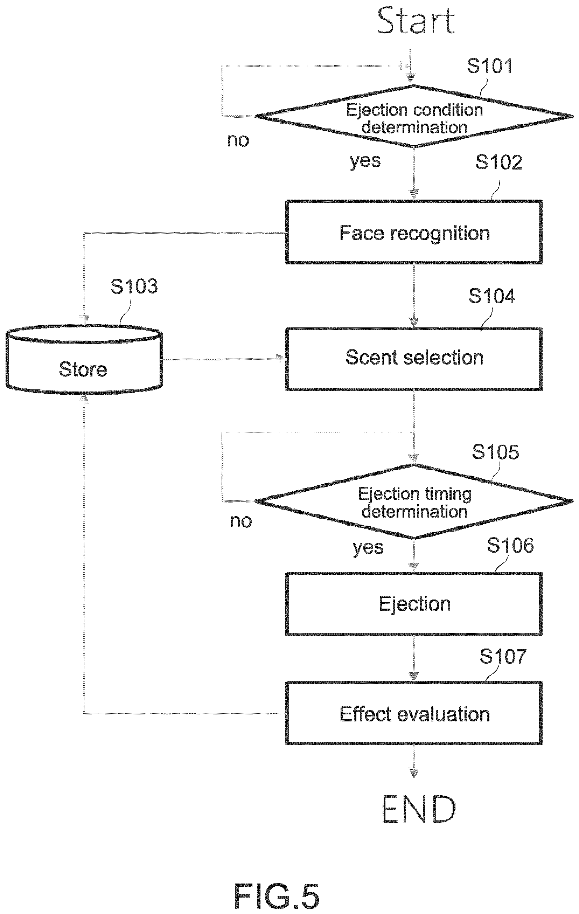

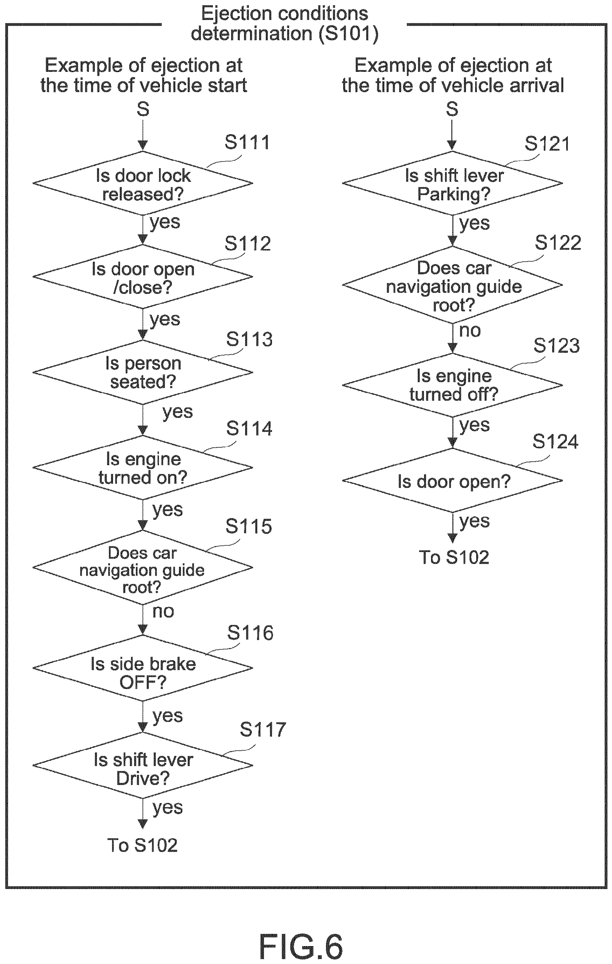

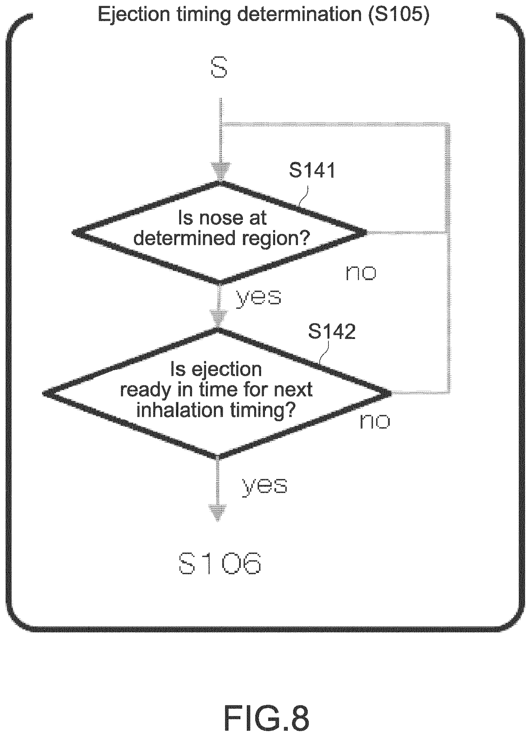

Subsequently, details of the control apparatus 10 will be described together with the operation of the control system 100. Fig. 5 is a flowchart showing a processing procedure executed by the control apparatus 10. Fig. 6 is a flowchart for explaining processing of determining an ejection condition. Fig. 7 is a flowchart for explaining processing of selecting the scent. Fig. 8 is a flowchart for explaining processing of determining the ejection timing. In Application Example 1, a processing procedure executed when the control apparatus 10 is mounted on the vehicle and the vehicle 1 starts will be described.

First, the second determination section 1232 determines the vehicle state based on the output of the vehicle state detection section 60, and determines whether or not the ejection condition is satisfied (S101 of Fig. 5).

As shown in Fig. 6, the ejection condition includes conditions of S111 to S117, and when the above conditions are satisfied, the processing proceeds to S102 of Fig. 5.

In Sill, it is determined whether or not a door lock is released, and in S112, it is determined whether or not the door 5 is opened. The determination in S111 and S112 is performed by the second determination section 1232 based on information about the state of the door lock and information about the opening and closing of the door 5 acquired by the vehicle state detection section 60.

In S113, it is determined whether or not the user U is seated. The determination in S113 is performed by the second determination section 1232 using, for example, a pressure sensor provided in the driver's seat S1 acquired by the vehicle state detection section 60.

In S114, it is determined whether or not the engine is turned on. The determination in S114 is performed by the second determination section 1232 using, for example, the sensor that recognizes the start of the engine acquired by the vehicle state detection section 60.

In S115, it is determined whether or not the car navigation system 7 guides. The determination in S115 is performed by the second determination section 1232 using the vehicle state detection section 60 connected so as to be able to receive the information of the car navigation system 7 wirelessly or wired.

In S116, it is determined whether or not the parking brake 8 is off. The determination in S116 is performed by the second determination section 1232 using, for example, a sensor that recognizes the state of the parking brake acquired by the vehicle state detection section 60.

In S117, it is determined whether or not the shift lever is driven. The determination in S117 is performed by the second determination section 1232 using, for example, the sensor that recognizes the shift position of the shift lever acquired by the vehicle state detection section 60.

As shown in Fig. 6, when determination results of S111 to S114, S116 and S117 are "yes" and a determination result of S115 is "no", the second determination section 1232 determines that the ejection condition is satisfied.

Here, it is assumed that the ejection condition satisfies all of the above conditions (Sill to S117) with respect to the time of starting the vehicle 1, but it is not limited thereto, and it may be determined that the ejection condition is satisfied when at least one of these conditions is satisfied. For example, with respect to the time of starting, when the engine is started, the processing may proceed to S102. Furthermore, it is not limited to the above conditions and the ejection condition may be determined by other conditions.

Subsequently, face recognition is performed (S102 of Fig. 5).

With respect to the face recognition, the processing section 13 detects the face of the user U from the captured image captured by the image capturing section 20. As described above, the processing section 13 includes the deep learning device, and detects the face of the user U from the captured image using the learning model (face recognition algorithm) stored in the processing section 13.

Subsequently, the facial information of the user U detected in S102 is stored in the storage 50 (S103 of Fig. 5), and the processing proceeds to S104 of Fig. 5.

The selection section 124 selects the scent based on the information of the user U stored in advance based on the facial information of the user U (S104 of Fig. 5).

As shown in Fig. 7, in S131, the captured image of the face of the user U captured by the image capturing section 20 and the facial information of the user stored in the storage 50 in advance are compared. As described above, the evaluation section 125 includes the deep learning device, and compares whether or not the face of the user U of the captured image matches the facial information of the user, using the learning model stored in the evaluation section 125. When the facial information acquired by the image capturing section 20 matches registered facial information (yes in S131) and when there is a highly effective scent from the information of the user U (yes in S132), the scent is selected by the selection section 124 (S134).

On the other hand, when the facial information acquired by the image capturing section 20 does not match the registered facial information in the storage 50 (no in S131) or when it is determined that there is no highly effective scent (no in S132), the scent is randomly selected from the scents prepared in advance (S133).

Here, the highly effective scent is the scent evaluated by the evaluation section 125. For example, as shown in Fig. 4, when the user U gets in at home in the morning and sleepiness is detected from the facial expression of the user U, a citrus scent is ejected and a refreshed facial expression is obtained. Such scent is a highly effective scent. On the other hand, for example, the user U gets in at home in the morning and sleepiness is detected from the facial expression of the user U, a specific scent is ejected and a further sleepy expression is obtained. Such scent is a low effective scent.

The facial information of the user stored in advance is, for example, the facial information in which the "personal ID" shown in Fig. 4 is stored in "0001" .

Subsequently, the ejection timing is determined (S105 of Fig. 5).

The first determination section 1231 determines whether or not the nose N is positioned in the predetermined space region W based on the output of the processing section 13 that detects the position of the nose N of the user U.

When the nose N is positioned in the predetermined space region W, as shown in Fig. 9, an appropriate state is obtained. Thus, the first determination section 1231 can output a signal in which the nose N is positioned in the predetermined space region W to the signal generation section 122.

The calculation section 121 calculates the breathing cycle from the body movement of the user U at the time of breathing detected by the body movement detection section 20, and the signal generation section 122 determines, based on the breathing cycle, whether or not the scent ejected from the ejection section 31 within the inhalation period of the user U can reach the predetermined space region W.

As shown in Fig. 9 with respect to S105 of Fig. 5, the time lag occurs until the scent reaches the user U after the scent is ejected. Therefore, the signal generation section 122 calculates the timing at which the scent is ejected in consideration of the time lag.

Here, the time lag may be calculated by the determination section 123 based on the distance between the ejection section 31 and the nose N. Furthermore, it is not limited thereto, and the time lag may be corrected in accordance with an open degree of a window, air conditioner working or not, an air flow from the window or the air conditioner, and the like.

In addition, it is preferable that the user U can recognize the scent within the inhalation period, and for example, the time lag of the scent may be calculated by the signal generation section 122 so that the scent is provided at most within the inhalation period. Examples of the timing at which the scent arrives include the point KY and the point Y of Fig. 9.

When it is determined that the scent can be ejected to the user U within the breathing cycle of the user U, the signal generation section 122 generates the output signal that ejects the scent.

Subsequently, the ejection driving section 33, which has received the output signal from the signal generation section 122, ejects the scent based on the output signal (S106 of Fig. 5).

Subsequently, the evaluating section 125 evaluates the state of the user U after the scent is ejected to the user U (S107 of Fig. 5).

The evaluated state of the user U is stored in the storage 50 as shown in Fig. 4.

As described above, in the present embodiment, an appropriate amount of the scent can be ejected to the user at an appropriate timing.

As described above, the present embodiment describes a case where the scent is ejected once to the user U, but the scent may be ejected a plurality of times.

Hereinafter, in various application examples, the details of the ejection condition of the scent will be described.

### (Application Example 2: Get Out)

A processing procedure executed when the control apparatus 10 is mounted on the vehicle 1 and the vehicle 1 arrives at the destination will be described.

First, the second determination section 1232 determines the vehicle state based on the output of the vehicle state detection section 60, and determines whether or not the ejection condition is satisfied (S121 of Fig. 6).

As shown in Fig. 6, the ejection condition includes respective conditions of S121 to S124, and when the above-described conditions (S121 to S124) are satisfied, the processing proceeds to S102.

In S121, it is determined whether or not the shift lever 6 is parking. In S121, determination is performed by the second determination section 1232 using the sensor that recognizes the shift position of the shift lever, which is acquired by the vehicle state detection section 60.

In S122, it is determined whether or not the car navigation system 7 guides. In S122, determination is performed by the second determination section 1232 using the vehicle state detection section 60 connected so as to be able to receive the information of the car navigation system 7 wirelessly or wired.

In S123, it is determined whether or not the engine is turned off. In S123, determination is performed by the second determination section 1232 using, for example, a sensor that recognizes a stoppage of the engine acquired by the vehicle state detection section 60.

In S124, it is determined whether or not the door is opened. In S115, determination is performed by the second determination section 1232 based on the information about the opening and closing of the door 5 acquired by the vehicle state detection section 60.

As shown in Fig. 6, when determination results of S121, S123 and S124 are "yes" and a determination result of S122 is "no", the second determination section 1232 determines that the ejection condition is satisfied.

Here, it is assumed that the ejection condition satisfies all of the above conditions (S121 to S124) with respect to the time of arrival at the destination of the vehicle 1, but it is not limited thereto, and it may be determined that the ejection condition is satisfied when at least one of these conditions is satisfied. For example, with respect to the time of arrival at the destination, when the engine is turned off, the processing may proceed to S102. Furthermore, it is not limited to the above conditions and the ejection condition may be determined by other conditions.

[0001] The steps from S102 to S107 shown in Fig. 5 are performed in the same manner as the above-described starting of the vehicle 1.

Furthermore, as shown in Fig. 4, the highly effective scent at the time of arrival at the destination is, for example, such that the facial expression of the user U when arriving at the workplace in a morning commute is a gloomy facial expression, but after a herbal scent is ejected, the facial expression becomes an energetic facial expression. On the other hand, a low effective scent is such that the facial expression remains gloomy.

### (Application Example 3)

Other than the above-described vehicle states concerning the ejection condition of the scent, for example, a case where the vehicle rides on the expressway will be described.

In Application Example 3, as to the ejection condition of S101 shown in Fig. 5, it is determined whether or not the vehicle 1 rides on the expressway. In S101, determination is performed by, for example, acquiring information whether or not the vehicle 1 rides on the expressway from the GNSS or the like from the communication section 40, and determining whether or not the control apparatus 10 rides on the expressway based on the acquired information.

Subsequently, the highly effective scent in the case of the expressway is, for example, lavender scent having a relaxing effect. As a result, it is possible to drive on the expressway in a calm manner.

As described above, it is possible to provide the scent at an appropriate timing even for a change in a living scene other than the start or arrival of the vehicle, such as a case where the vehicle rides on an expressway.

### (Application Example 4)

Other than the above-described vehicle states concerning the ejection condition of the scent, for example, a case of the traffic jam will be described.

In Application Example 4, as to the ejection condition of S101 shown in Fig. 5, it is determined whether or not the vehicle 1 is in the traffic jam. In S101, determination is performed by, for example, acquiring speed information of the vehicle 1 from the communication section 40 including GNSS information. Here, the second determination section 1232 determines that the control apparatus 10 is in the traffic jam when the vehicle is running at a constant speed or less for a predetermined period of time.

Subsequently, the highly effective scent in the case of the traffic jam is, for example, a lavender scent having a relaxing effect. As a result, even in a traffic jam, it is possible to drive in a calm manner.

As described above, it is possible to provide the scent at an appropriate timing even for a change in a living scene other than the start or arrival of the vehicle, such as a case where the vehicle is in the traffic jam.

In addition to the above-described vehicle states, for example, the ejection condition of the scent can be set as appropriate other than the above-described conditions, such as, for example, ejecting the herbal scent in order to wake up sleepiness when driving for a predetermined time or longer.

### <Second Embodiment>

As the ejection condition of the scent, when the user U is not in the vehicle 1, for example, a case where the user U is indoors will be described. In the present embodiment, for example, a start of work is exemplified.

Hereinafter, configurations different from those in the first embodiment will be mainly described, and configurations similar to those in the first embodiment will be denoted by similar reference symbols, and description thereof will be omitted or simplified.

The case of the start of work will be described. The first determination section 1231 determines whether or not the user U is positioned in the predetermined space region W based on the output of the processing section 13 that detects the position of the face of the user U, and the signal generation section 122 generates the output signal that ejects the scent when the first determination section 1231 determines that the face of the user is positioned in the predetermined space region W.

First, the acquisition section 11 acquires time information from the communication section 40.

Then, the start of work is determined by the determination section 123 from a start-up time of the workplace of the user U stored in the storage 50.

In addition, the first determination section 1231 determines whether or not the user U is seated from the captured image captured by the image capturing section 20. The installation position of the image capturing section 20 is, for example, a desk used by the user U. Thus, the scent can be ejected after the start-up time is elapsed and when the user U is seated. Here, the installation position of the ejection section 31 is, for example, the desk used by the user U similar to the image capturing section 20.

Here, the predetermined space region W is a space at a predetermined height from a chair where the user seats, and as in the first embodiment, it is preferable that the predetermined space region W is set at a position where the face (mainly the nose) of the user comes when the user seats on the chair.

In addition to the above-described desk, the image capturing section 20 and the ejection section 31 may be provided on a display of a notebook PC or a desktop personal computer.

The highly effective scent at start-up time is, for example, the citrus scent. As a result, it is possible to work concentratedly.

In the second embodiment, the timing of the start of work has been described as an example, but it is not limited thereto. For example, the scent may be ejected at the end of the work as well as at the start of the work. In this case, the highly effective scent at the end of work is, for example, rose, lavender, or camomile. As a result, it is possible to finish the work while relieving irritation and stress at the time of work.

The timing other than the above may be a case where the scent is ejected at a start or end of a meeting. For example, the scent may be ejected when an app used for the meeting is open or when the app is closed. The highly effective scent at the start of the meeting is, for example, the citrus scent. This results in the concentrated meeting.

Furthermore, the highly effective scent at the end of the meeting is, for example, rose, jasmine, or a lily of the valley. This reduces the feeling of fatigue at the time of the meeting.

This makes it possible to provide an appropriate amount of the scent at an appropriate timing even in a case where a change in a living scene occurs indoors.

Although the present technology has been described with reference to the respective examples, the present technology is not limited to the above-described examples, and it is possible to provide the scent in accordance with changes in various living scenes.

In the above-described embodiment, the injection apparatus 30 is installed in the vicinity of the sun visor 4.

However, installation examples of the injection apparatus 30 is not limited to the vicinity of the sun visor 4. For example, the injection apparatus 30 may be installed on the ceiling above the seat of the occupant provided with the scent, in the vicinity of a side window near the seat of the occupant provided with the scent, at a door near the seat of the occupant provided with the scent, a pillar near the seat of the occupant provided with the scent, or in the vicinity of a headrest of the seat of the occupant provided with the scent (in particular, a place near a shoulder or a head of the occupant). For the driver, the injection apparatus 30 may be installed in the vicinity of the handle H, a cockpit panel, and in the sun visor 4 itself. For the occupant of the passenger's seat, the injection apparatus 30 may be installed in the vicinity of a glove box or in the sun visor itself. For a rear seat occupant, the injection apparatus 30 may be installed in a rear of a front seat of the occupant (in the region or in the vicinity of the region in front of the rear seat occupant's eyes).

Furthermore, in the above-described embodiments, it is described that the control apparatus 10 is in the vehicle, but all or some functions of the control apparatus 10 (the calculation section 121, the signal generation section 122, the determination section 123, the selection section 124, and the evaluation section 125) may be provided outside the vehicle at a place away from the vehicle.

For example, in a case where the control apparatus 10 is provided at a place away from the vehicle, the control apparatus 10 is connected to the vehicle state detection section 60, the image capturing section 20, and the injection apparatus 30 via a communication network.

In addition, in the case of a configuration in which some functions of the control apparatus 10 are processed by an apparatus provided at a place away from the vehicle (an apparatus at a remote location), the apparatus at the remote location is connected to the control apparatus 10, the vehicle state detection section 60, the image capturing section 20, and the injection apparatus 30 via a communication network.

Note that the present technology may also take the following configurations.

(1) A control apparatus, including:
   a calculation section that calculates a breathing cycle based on an output of a body motion detection section that detects a breathing body motion of a user; and
   a signal generation section that generates an output signal that causes an ejection section to eject a scent to a predetermined space region based on an output of the calculation section.
(2) The control apparatus according to (1), in which
   the signal generation section generates the output signal so that the scent ejected from the ejection section reaches the predetermined region within an inhalation period of the user based on the breathing cycle.
(3) The control apparatus according to (1) or (2), further including:
   a processing section that detects a position of a face of the user based on an output of an image capturing section that captures an image of the user; and
   a first determination section that determines whether or not the face of the user is positioned in the predetermined space region based on an output of the processing section, in which
   the signal generation section generates the output signal when the first determination section determines that the face of the user is positioned in the predetermined space region.
(4) The control apparatus according to (3), in which
   the processing section detects a position of a nose of the user, and
   the signal generation section generates the output signal when the first determination section determines that the position of the nose of the user is positioned in the predetermined space region.
(5) The control apparatus according to any one of (1) to (4), in which
   the signal generation section generates an output signal that controls a total ejection amount of the scent.
(6) The control apparatus according to any one of (1) to (5), further including:
   a selection section that can select a predetermined scent from plural types of scents that can be ejected by the ejection section based on information of the user acquired in advance, in which
   the signal generation section generates an output signal that causes the predetermined scent selected by the selection section to be ejected.
(7) The control apparatus according to (3) or (4), further including:
   a second determination section that determines a vehicle state based on an output of a vehicle state detection section that detects a vehicle state in which the user gets in, in which
   the signal generation section generates the output signal based on an output of the second determination section.
(8) The control apparatus according to (3) or (4), further including:
   an evaluation section that evaluates the state of the user before and after generation of the output signal based on an output of the image capturing section.
(9) An ejection apparatus, including:
   an ejection section that ejects a scent to a user; and
   a control apparatus including
      a calculation section that calculates a breathing cycle based on an output of a body movement detection section that detects a breathing body motion of the user, and
   a signal generation section that generates an output signal that causes the ejection section to eject a scent to a predetermined space region based on an output of the calculation section.
(10) The ejection apparatus according to (9), in which
   the ejection section has a plurality of cartridge sections that accommodates each of the plural types of scents, and
   the control apparatus further includes a selection section that selects a predetermined cartridge section from the plurality of cartridge sections.
(11) The ejection apparatus according to (9) or (10), in which
   the ejection section is arranged in a vehicle cabin, and
   the predetermined space region is a predetermined space region in the vehicle cabin.
(12) A control method, including:
   calculating a breathing cycle based on an output of a body motion detection section that detects a breathing body motion of a user by a control apparatus, and
   generating an output signal that causes an ejection section to eject a scent to a predetermined space region based on the breathing cycle by the control apparatus.
(13) A control system, including:
   an ejection section that ejects a scent to a user;
   a body motion detection section that detects a breathing body motion of the user; and
   a control apparatus including
      a calculation section that calculates a breathing cycle based on an output of the body movement detection section, and
      a signal generation section that generates an output signal that causes the ejection section to eject a scent to a predetermined space region based on the breathing cycle.
(14) The control system according to (13), further including:
   an image capturing section that captures an image of the user, in which
   the control apparatus further includes an evaluation section that evaluates a state of the user before and after generation of the output signal based on an output of the image capturing section.

### Reference Signs List

- 1: vehicle
- 1A: vehicle cabin
- 10: control apparatus
- 11: acquisition section
- 12: control section
- 121: calculation section
- 122: signal generation section
- 123: determination section
- 124: selection section
- 125: evaluation section
- 20: image capturing section (body motion detection section)
- 30: injection apparatus
- 31: ejection section
- 32: cartridge section
- 50: storage
- 100: control system
- W: predetermined space region

## Claims

1. A control apparatus, comprising:
a calculation section that calculates a breathing cycle based on an output of a body motion detection section that detects a breathing body motion of a user; and
a signal generation section that generates an output signal that causes an ejection section to eject a scent to a predetermined space region based on an output of the calculation section.

2. The control apparatus according to claim 1, wherein
the signal generation section generates the output signal so that the scent ejected from the ejection section reaches the predetermined region within an inhalation period of the user based on the breathing cycle.

3. The control apparatus according to claim 1, further comprising:
a processing section that detects a position of a face of the user based on an output of an image capturing section that captures an image of the user; and
a first determination section that determines whether or not the face of the user is positioned in the predetermined space region based on an output of the processing section, wherein
the signal generation section generates the output signal when the first determination section determines that the face of the user is positioned in the predetermined space region.

4. The control apparatus according to claim 3, wherein
the processing section detects a position of a nose of the user, and
the signal generation section generates the output signal when the first determination section determines that the position of the nose of the user is positioned in the predetermined space region.

5. The control apparatus according to claim 1, wherein
the signal generation section generates an output signal that controls a total ejection amount of the scent.

6. The control apparatus according to claim 1, further comprising:
a selection section that can select a predetermined scent from plural types of scents that can be ejected by the ejection section based on information of the user acquired in advance, wherein
the signal generation section generates an output signal that causes the predetermined scent selected by the selection section to be ejected.

7. The control apparatus according to claim 3, further comprising:
a second determination section that determines a vehicle state based on an output of a vehicle state detection section that detects a vehicle state in which the user gets in, wherein
the signal generation section generates the output signal based on an output of the second determination section.

8. The control apparatus according to claim 3, further comprising:
an evaluation section that evaluates the state of the user before and after generation of the output signal based on an output of the image capturing section.

9. An ejection apparatus, comprising:
an ejection section that ejects a scent to a user; and
a control apparatus comprising
a calculation section that calculates a breathing cycle based on an output of a body movement detection section that detects a breathing body motion of the user, and
a signal generation section that generates an output signal that causes the ejection section to eject a scent to a predetermined space region based on an output of the calculation section.

10. The ejection apparatus according to claim 9, wherein
the ejection section has a plurality of cartridge sections that accommodates each of the plural types of scents, and
the control apparatus further comprises a selection section that selects a predetermined cartridge section from the plurality of cartridge sections.

11. The ejection apparatus according to claim 9, wherein
the ejection section is arranged in a vehicle cabin, and
the predetermined space region is a predetermined space region in the vehicle cabin.

12. A control method, comprising:
calculating a breathing cycle based on an output of a body motion detection section that detects a breathing body motion of a user by a control apparatus, and
generating an output signal that causes an ejection section to eject a scent to a predetermined space region based on the breathing cycle by the control apparatus.

13. A control system, comprising:
an ejection section that ejects a scent to a user;
a body motion detection section that detects a breathing body motion of the user; and
a control apparatus comprising
a calculation section that calculates a breathing cycle based on an output of the body movement detection section, and
a signal generation section that generates an output signal that causes the ejection section to eject a scent to a predetermined space region based on the breathing cycle.

14. The control system according to claim 13, further comprising:
an image capturing section that captures an image of the user, wherein
the control apparatus further comprises an evaluation section that evaluates a state of the user before and after generation of the output signal based on an output of the image capturing section.
